(19)

Europäisches
Patentamt
European
Patent Office
Office européen
des brevets

(11)  **EP 4 764 863 A2**

(12)  **EUROPEAN PATENT APPLICATION**

(43) Date of publication:
24.06.2026  Bulletin 2026/26

(21) Application number: 25198545.3

(22) Date of filing: **27.08.2025**

(51) International Patent Classification (IPC):
*G06F 11/10* (2006.01)

(52) Cooperative Patent Classification (CPC):
G06F 11/1076

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 30.08.2024  US 202463689390 P
25.08.2025  US 202519308516

(71) Applicant: **Cubbit S.R.L.**
40121 Bologna (IT)

(72) Inventors:
• **Moschettini, Marco**
**8032 Zürich (CH)**
• **PACCOIA, Alessio**
**40129 Bologna (IT)**
• **POSANI, Lorenzo**
**New York, 10027 (US)**

(74) Representative: **Tiburzi, Andrea et al**
**Barzanò & Zanardo Roma S.p.A.**
**Via Piemonte 26**
**00187 Roma (IT)**

(54)  **REDUNDANCY FOR MULTIPLE FAILURE TYPES IN DISTRIBUTED DATA STORAGE**

(57)  The present disclosure presents systems and methods for distributed data storage with enhanced redundancy to ensure high fault tolerance and data availability. A multi-layer scheme can be leveraged that combines local redundancy within datacenters and geographic redundancy across multiple locations. Data objects to be stored can be divided into shards and encrypted using error-correcting codes, such as Reed-Solomon codes, and distributed across a swarm of nodes. These nodes can be organized into nexuses and rings to attempt to optimize for factors such as redundancy and fault recovery. A centralized coordinator can oversee tasks such as shard placement, system health monitoring, and failure recovery. Such approaches can help to ensure seamless data restoration during device, node, or regional failures while providing a scalable and efficient framework for robust distributed storage.

FIG. 1

**EP 4 764 863 A2**

**Description**

CROSS-REFERENCE TO RELATED APPLICATIONS

This application claims priority to U.S. Non-Provisional Patent Application Serial Number 19/308,516, filed August 25, 2025, entitled "REDUNDANCY FOR MULTIPLE FAILURE TYPES IN DISTRIBUTED DATA STORAGE" which claims priority to Provisional Patent Application Serial Number 63/689,390, filed on August 30, 2024, and entitled "REDUNDANCY FOR MULTIPLE FAILURE TYPES IN DISTRIBUTED DATA STORAGE," which are hereby incorporated herein in their entirety and for all purposes.

TECHNICAL FIELD

This disclosure generally relates to the distributed data storage systems, and in at least one embodiment relates in particular to multi-layer redundancy schemes for enhancing fault tolerance in distributed storage services.

BACKGROUND

As data storage increasingly relies on shared or networked resources, including multi-tenant cloud environments, various system-level failures present significant challenges. These challenges become more complex as these resources, which may include physical and virtual resources, are spread to a variety of different locations both within, and across, geometric boundaries. Current redundancy and recovery methods often lack the speed, consistency, quality, and efficiency required to address diverse failure scenarios. Such methods also may perform within or across geometric boundaries, but do not adequately and efficiently support failures in both types of locations.

BRIEF SUMMARY

The present disclosure describes approaches useful for distributed data storage with multi-layer redundancy. Such multi-layer redundancy can allow for recovery of data during events such as device or datacenter failures. An approach in accordance with at least one embodiment employs both local and geographic distributions. Such an approach can allow for efficient recovery while also attempting to optimize resource usage. Data objects stored in such a storage system can be divided into shards that are encoded with error-correcting codes. These shards can then be stored across a number of diverse nodes, ensuring local and geo-distributed fault tolerance. Such approaches can provide, for example and without limitation, improved distributed data storage systems and devices, as well as improved methods for operating such storage systems and devices. Such approaches can implement redundancy and distribution in a single upstream operation, without delegating it to other technologies (such as RAID on a single server). Such an approach can also apply redundancy both at a geographical level and at a local level, such as at the level of an individual data center, within a single technology.

BRIEF DESCRIPTION OF THE FIGURES

FIG. 1 illustrates an example swarm divided into a number of nexuses, according to at least one embodiment.

FIG. 2 illustrates an example nexus including a collection of agents running on different nodes, according to at least one embodiment.

FIG. 3 illustrates an example system for processing data, according to at least one embodiment.

FIG. 4 illustrates an example global system architecture, according to at least one embodiment.

FIG. 5 illustrates components of a system useful to ingest data, according to at least one embodiment.

FIG. 6 illustrates components of a system useful to offload data to a swarm, according to at least one embodiment.

FIG. 7 illustrates components of a system useful to detect component failures, according to at least one embodiment.

FIG. 8 illustrates components of a system useful to perform local recovery, according to at least one embodiment.

FIG. 9 illustrates components of a system useful to perform geographic recovery, according to at least one embodiment.

FIGS. 10A and 10B illustrate processes that can be used for data storage and recovery, according to at least one embodiment.

FIG. 11 illustrates an example computing environment in which aspects of various embodiments can be implemented, according to at least one embodiment.

FIG. 12 illustrates an example computing device that can be used to perform processing and data operations discussed herein, according to at least one embodiment.

## DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

Approaches in accordance with various embodiments provide for distributed object storage while ensuring high availability and fault tolerance through multi-level redundancy. Data objects to be stored in such a system or environment can be divided or segmented into one or more shards (or other such data partitions). Individual shards can be encrypted and encoded multiple times (i.e., twice or more) using error-correcting codes (e.g., Reed-Solomon) and distributed across both local nodes and geo-distributed nodes. In one example, a media company might store high-definition videos for global access. In such a scenario, each video could be divided into a number of partitions (e.g., data shards), which could be encoded and distributed across multiple datacenters worldwide. If a regional outage were to occur in one location, a data storage system in accordance with at least one embodiment can leverage the shards stored in other locations to restore access, seamlessly ensuring uninterrupted service to, for example, end-users consuming that video content. A centralized coordinator can be used to optimize shard placement and recovery operations, balancing performance and redundancy. Such functionality can be performed in a single operation, without leveraging a separate component such as a local hardware RAID controller on each single server.

In at least one embodiment, at least one swarm can be used which provides a logical grouping of nodes that is able to operate as a unified storage system. As discussed in more detail later herein, a swarm can correspond to a logical grouping of nodes that is able to operate as a unified storage system. These nodes, which may be physical or virtual, can be connected (manually or otherwise) to a coordinator by one or more users (e.g., system operators). These nodes can be geographically distributed across multiple datacenters or locations to enhance fault tolerance. A coordinator can track the status of individual nodes, and can provide a centralized interface (e.g., a dashboard or application programming interface (API)) that allows for at least some management of these dispersed resources. Operators can expand storage capacity dynamically by adding nodes incrementally without re-deploying the entire infrastructure. Newly added nodes can integrate seamlessly under the supervision of such a coordinator, ensuring consistent performance and uninterrupted operation.

A node can function as a foundational building block of a swarm in at least one embodiment, with a node representing a physical or virtual machine (or resource) equipped at least to store data. Individual nodes, geographically distributed across datacenters or other high-performance computing environments, can enhance the overall capacity and fault tolerance of a given swarm. Nodes can be connected to a coordinator, which can help to contribute to the scalability and redundancy of such a distributed storage solution.

Agents, or other such software components, can be used for specific tasks, such as to manage a single storage device (e.g., disk drive or solid-state storage) connected to a node. A given node may comprise one or more agents, with each agent corresponding to an attached storage device. In at least one embodiment, agents can be responsible for tasks such as the handling of encrypted shards of data objects, executing uploads and downloads, and enabling fine-grained resource management within the swarm. Such an approach can help to ensure efficient and secure data handling.

Approaches in accordance with at least one embodiment can take advantage of one or more nexuses. A nexus can refer to a subset of nodes within (or otherwise assigned to) a swarm, which can be at least somewhat analogous to an availability zone or regional grouping of resources. The resources in a given nexus will often be co-located in the same datacenter or geographic area. Nexuses can minimize correlated risks by storing only a fraction of the shards necessary to rebuild the entire information, improving overall fault tolerance and operational resilience.

There can be multiple redundancy classes used to store data in such a distributed storage solution. Redundancy classes can correspond to sets of configurable data protection policies that define distribution and fault tolerance levels. An individual swarm can support multiple such redundancy classes, allowing tailored solutions for varying storage needs. Such policies can help to ensure durability and availability at both local and geographic levels.

In at least one embodiment, a collection of agents in a swarm can be referred to as a ring. A ring can include a collection of agents organized to collaboratively ensure data availability, integrity, and resilience against failures or downtime. In at least one embodiment, an agent may be a member of multiple rings. Rings can operate under the governance of a specific redundancy class, which can dictate their operational rules, such as may relate to data distribution, replication, and fault tolerance. Multiple rings can exist within the same redundancy class, each serving as an independent unit of storage capacity. Such modularity can help to support scalability, as new rings can be seamlessly created by assigning the necessary nodes, and aligning them with the redundancy policies of that class, when additional storage is needed for a redundancy class. In at least one embodiment, structuring groups of nodes into rings can help to balance storage efficiency, fault tolerance, and operational flexibility.

As mentioned, a coordinator can be used in a distributed storage system, where the coordinator functions as a centralized software intelligence that can be installed on any appropriate infrastructure. An example coordinator can manage tasks such as shard placement, recovery, system health monitoring, and authentication. The coordinator can expose a control plane through a dashboard and APIs, for example, allowing users to monitor and optimize storage systems. The flexibility and scalability of such a coordinator can help to support diverse deployment scenarios.

An approach in accordance with at least one embodiment can utilize at least one gateway. A gateway can expose a system compatible interface to an external system, such as an interface compatible with the simple storage service (S3) from Amazon.com, Inc. or another such data storage service, as may provide object-based, block-based, or file-based storage, among other such options. Multiple gateways can be deployed on various infrastructures, including cloud environments, and configured to interact with one or more swarms. A given gateway can contain a data object storage server, a cache, and one or more offloader processes. The data object storage server can handle tasks such as processing API requests and performing encryption, which can help to ensure secure data management. An optional cache can be used to accelerate data transfers in specific scenarios, while offloaders may be used to execute algorithms for tasks such as splitting and encrypting files, applying redundancy, and transferring data to a swarm. Such an approach can help to ensure robust, scalable, and secure integration with external systems.

Approaches in accordance with various embodiments can provide one or more redundancy schemes useful for the restoration of data in the event of a loss of data due to, for example, a failure of a given device or an entire datacenter. Such a redundancy scheme can provide robust fault tolerance through a combination of local redundancy and geographic redundancy, helping to ensure data availability and durability across a wide range of failure scenarios. In at least one embodiment, a redundancy scheme can involve distributing data at two different levels, such as a local level within a same datacenter and at a geographic level involving multiple datacenters. For example, data stored to a server may be distributed redundantly over one or more other servers in the same datacenter such that if the server experiences a failure, the data can be recovered from the one or more other servers in the same datacenter. Data stored to a server may also be stored to servers in one or more other datacenters, such that if there is a failure of a given datacenter then the data can also be recovered from the server(s) with at least a portion of the redundant data in the one or more other datacenters (or other such locations). Each redundancy class can correspond to a ring, and there may be two or more rings of redundancy in a given deployment. Such a redundancy scheme can allow the same infrastructure to provide different reliable service-level agreements to different end users without configuring different clusters, and with a specific type of redundancy. Certain types of files or data might be routed to one or more specific rings of redundancy, which can be user configurable. An object uploaded to such a network can be divided and the parts encrypted, with the encrypted parts then being and encoded multiple times. The encoded shards can then be stored redundantly to resources of the appropriate ring or redundancy class according to the scheme and type of object, etc. In the event of a failure, a restoration manager can determine whether to perform a local or geographic-based recovery, and can locate the appropriate redundant shards to use to restore or recover the lost (or potentially lost) data. A datacenter can be considered as a nexus, and servers may be considered nodes within a nexus, and a user may be able to configure any number of nexuses or nodes for a given deployment. The redundancy scheme can be based in part on the number of nodes or nexuses used, as well as the number of nodes or nexuses that can be lost concurrently.

Variations of this and other such functionality can be used as well within the scope of the various embodiments as would be apparent to one of ordinary skill in the art in light of the teachings and suggestions contained herein.

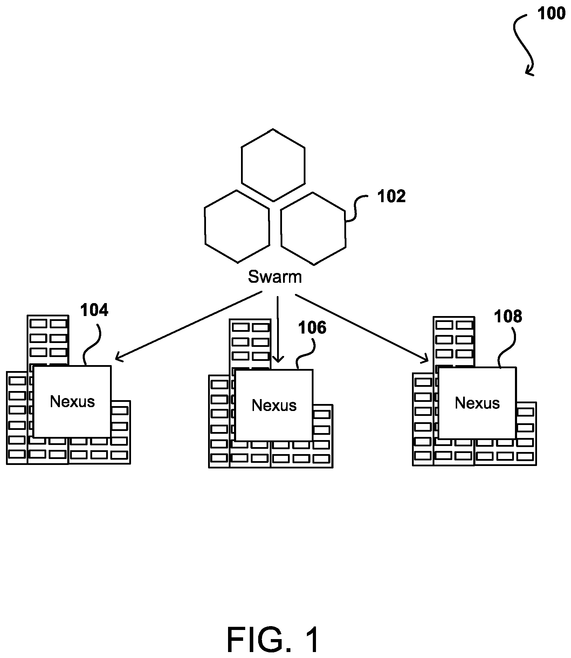

As mentioned, an example approach to distributed storage of data objects can provide for both local redundancy and geographic redundancy. FIG. 1 illustrates an example swarm-based system architecture 100 that can be used according to at least one embodiment. As illustrated, a swarm 102 can correspond to a logical grouping of nodes that is able to operate as a unified storage system. The swarm 102 can be associated with a number of nexuses 104, 106, 108. Nodes within the swarm 102 may be allocated to a number of different nexuses, where the resources in a given nexus will often be co-located in the same datacenter or geographic area. Local redundancy can be used to distribute and manage data shards across multiple nodes within the same nexus. Such an approach can provide agent-level fault tolerance, as if one or more agents fail within a given nexus fail, the remaining agents in that nexus can recover the lost data using the locally stored shards. Such an approach can provide for bandwidth efficiency as well, since local recovery occurs entirely within the nexus, and external bandwidth usage is minimized. This allows for faster restoration and a reduction in operational costs, among other such advantages. Such an approach can also provide high performance, as localized operations enhance data read/write speeds and ensure low-latency recovery in the event of node failures.

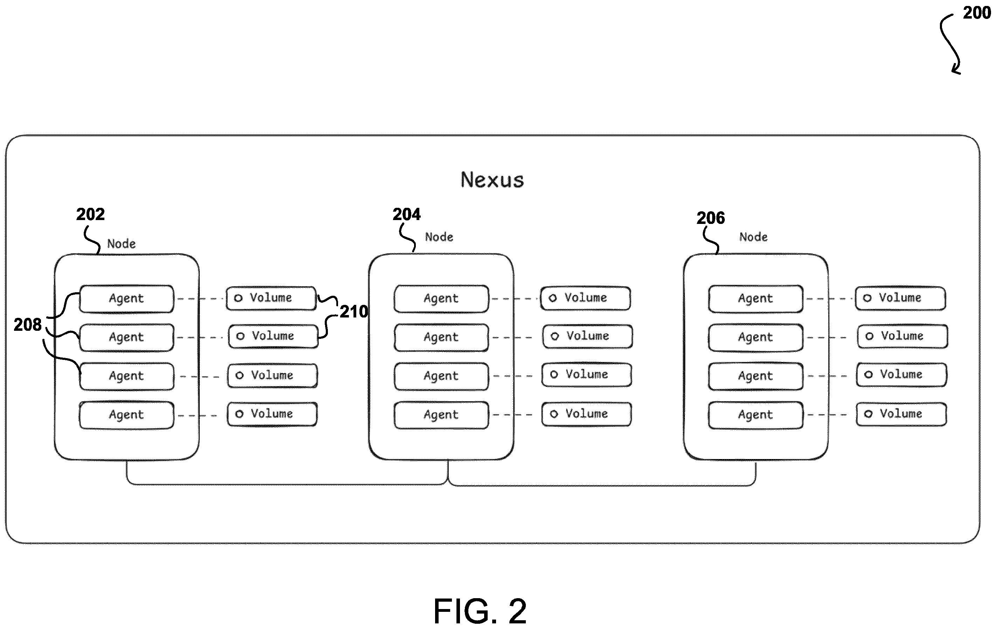

FIG. 2 illustrates components of an example nexus 200 according to at least one embodiment. As mentioned, a nexus can include a set of physical and/or virtual nodes 202, 204, 206. A given node 202 can include a subset of the agents 208 that were allocated to that nexus 200, where the respective agents 208 will run on (or otherwise be hosted by) that node 202. The individual agents 208 can each be associated with a respective data storage volume 210, such as at least one disk drive or solid-state storage. As mentioned, the ability to provide for localized operations in such an approach can help to increase data read/write speeds and reduce latency for various operations.

Geographic redundancy expands fault tolerance by distributing data shards across nodes in multiple nexuses in different geographic regions. A geographic redundancy layer can help to ensure regional fault tolerance, as in the event of a regional disaster (e.g., a power outage, natural calamity, or network failure), a data storage system can reconstruct lost data from shards stored in other nexuses. A geographic redundancy layer can also provide for operational continuity, as a data storage system can maintain data availability even in the case of catastrophic events by leveraging geographically diverse nodes. Geographic distribution also helps to diversify risk and ensure compliance with data residency and disaster recovery requirements, providing for enhanced resilience. By combining (at least) these two levels of redundancy, a data storage system in accordance with at least one embodiment can ensure seamless data availability and recovery, adapting to both localized and large-scale failures.

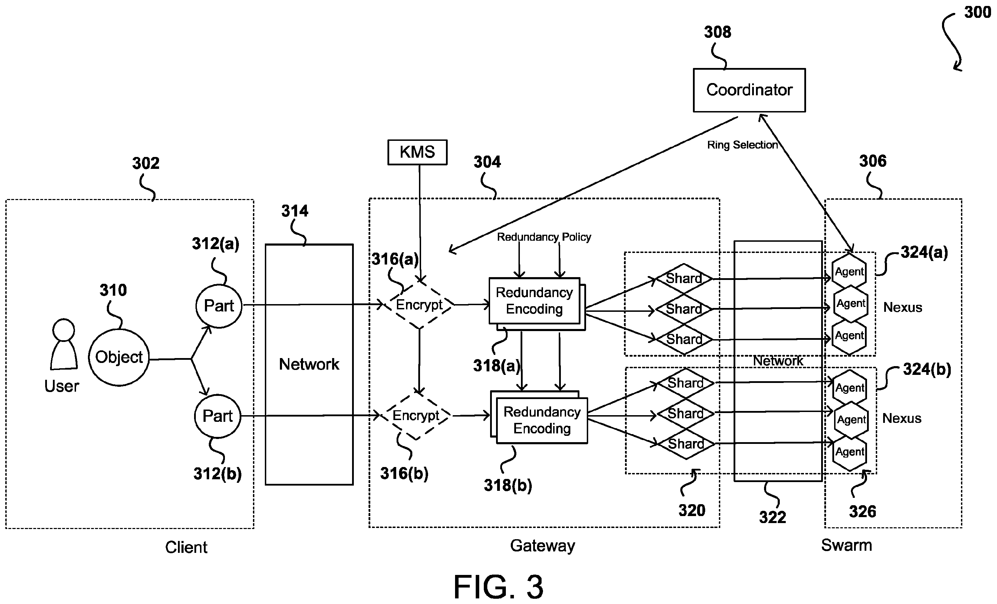

FIG. 3 illustrates components of an example system 300 that can be used to process data, according to at least one embodiment. This example system 300 allows a client 302 (e.g., an end-user device) to access a swarm 306 via an appropriate gateway 304. A coordinator 308 can be responsible for managing at least some of the functionality in the gateway 304 and the swarm 306. A user can provide a data object 310 that can be divided into parts 312(a),(b), and those parts transmitted over at least one network 314 to be received by the gateway 304. The gateway may perform one or more encryption operations 316(a),(b) on each of the data parts 312(a),(b) as well as perform redundancy encoding using one or more redundancy modules 318(a),(b) applying respective redundancy policies (e.g., local and geographic policies). The encoded data can then be allocated across a number of data shards 320, and those shards can be sent across another network 322 (or the same network 314) to be received by the respective nexuses 324(a),(b) of the corresponding swarm 306. Each nexus 324(a),(b) can include a number of agents 326 each corresponding to an attached storage volume, where the agents 326 can be responsible for tasks such as the handling of encrypted data shards.

Approaches in accordance with at least one embodiment can use at least four stages to help ensure that a distributed data storage system is robust, fault-tolerant, and efficient. These stages can include, for example, Swarm Composition, Data Storage, Data Recovery, and System Optimization. There may be additional, fewer, or alternative stages as well within the scope of the various embodiments.

During a Swarm Composition stage, a data storage manager (or other such system, service, or process) can create the basic structure and organization of one or more swarms, which can then function as building blocks of a distributed storage system. As mentioned, nexuses 324(a),(b) can be established to improve fault tolerance by, for example, reducing correlated risks and allowing for geographic distribution. The nodes added to a given swarm 306 can include physical nodes and/or virtual nodes. The agents deployed on individual nodes can be used for tasks such as to handle data storage and maintain consistency. Redundancy classes (associated with respective redundancy policies) can be established to define how data is protected and distributed. Operators can configure these classes to meet local and geographic fault tolerance requirements.

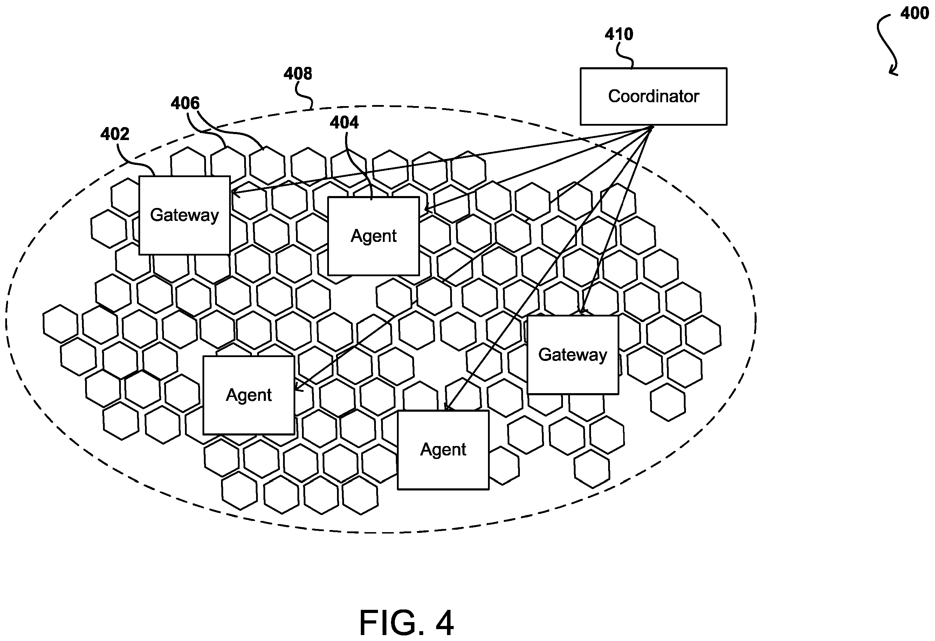

In at least one embodiment, agents 326 can be grouped into one or more rings, which can be associated with respective redundancy classes. As mentioned, a ring can include a collection of agents organized to, for example, collaboratively ensure data availability, integrity, and resilience against failures or downtime. An example distributed storage system can provide an advanced process for automatically creating, managing, and/or modifying such rings. One such process involves attempting to maximize the available storage space while carefully selecting appropriate agents (e.g., agents determined to be optima for this purpose) to distribute the load effectively across the network. Such a process can consider factors such as agent uptime, geolocation, bandwidth, and historical reliability to ensure data durability and accessibility. Automation of such a process can help to reduce or minimize human error, while ensuring that the redundancy classes operate at peak efficiency. Rings can also be created manually for advanced scenarios, allowing operators to customize configurations for specific use cases. Such a process can also involve configuring one or more gateways, where individual gateways can connect to one or more swarms and can be tied to specific redundancy classes. FIG. 4 illustrates an example high-level global architecture 400 of an example distributed data storage system, according to at least one embodiment. In this example, a coordinator 410 is able to communicate with a variety of gateways 402 and agents 404 for a number of data shards 406 stored to a given ring or nexus 408. These gateways 402 can provide external system-compatible interfaces, allowing for data upload, retrieval, and interoperability across the system. Data storage can occur via such a gateway 402, and can be divided into phases such as an ingestion phase and an offloading phase. Such phases can be used to attempt to improve and/or optimize system performance during data upload and ensure resilience after storage.

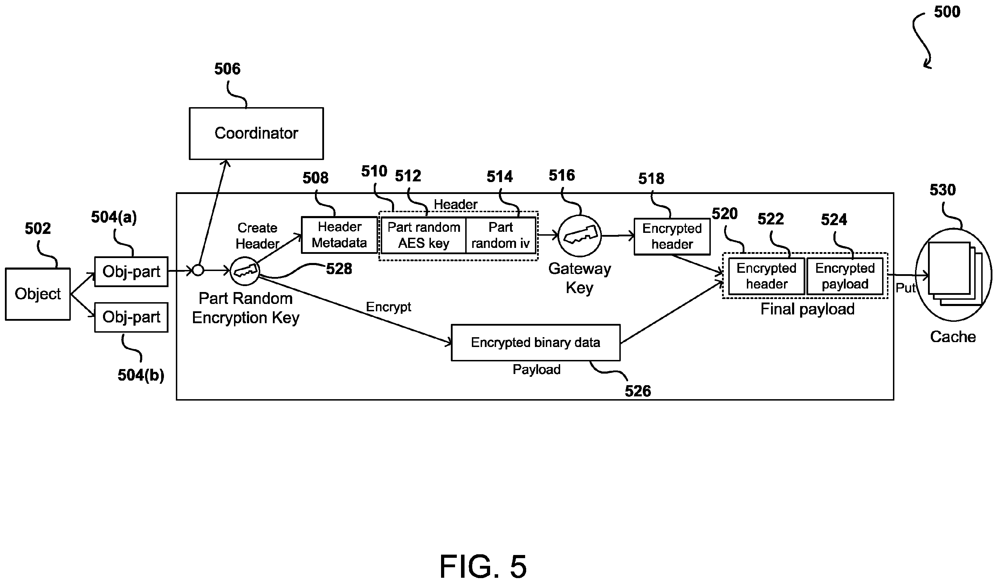

FIG. 5 illustrates components 500 of an example system useful for ingesting data, according to at least one embodiment. In this example, a data object 502 is divided into at least two object parts 504 (a),(b), with each part being processed separately under control of at least one coordinator 506. A header can be created for each part, as may include header metadata 508 and a header portion 510, which may include a part random AES key (reference number 512) and a part random initialization vector (IV) 514. An initialization vector (IV) is a random or pseudorandom value used in some encryption algorithms to introduce additional randomness and make encryption more secure, which can be important for functions such as preventing identical plaintexts from producing identical ciphertexts. A gateway key 516 can be used to encrypt the header, producing an encrypted header 518. An encryption key 528 can be randomly generated as appropriate, and header information encrypted with that key may also be encrypted with another key (e.g., a gateway key 516) for additional protection. Only one of the keys may be possessed by a user in at least one embodiment, so that a provider of the storage resources is not able to decrypt the data being stored without knowledge of the user. A part random encryption key 528 thus can be used to encrypt the payload of the object part, producing encrypted binary data 526. A final payload 520 can then be generated that includes the encrypted header 522, encrypted under the gateway key 516, and an encrypted payload 524, including the binary data encrypted under the part random encryption key. The final payload 520 can then be written to the appropriate cache 530.

In such a system, a random AES256 key can be created for each part, with an initialization vector that is itself random. With this key, the contents of the file can be encrypted. A header is then created that contains metadata related to the encryption process (e.g., Header Metadata). This metadata can specify a type of algorithm used for encryption, and can include other information (offsets, etc.) needed to retrieve the encryption keys. The header can also include the newly randomly-generated AES key and IV. This header is, in turn, encrypted with a symmetric or asymmetric key associated with the gateway and reference tenant. This key can then be stored on, for example, an external key management storage managed by the operator. At the end of such a process, the encrypted header and payload can be merged. This new file is then optionally cached, subjected to the two levels of erasure encoding, and saved on the agents. In such a process, a user only need possess the Gateway Key, as all the other keys can be saved within the file contents on the network and can be retrieved live.

During an ingestion phase of such a process, users (or other entities or sources) can upload an input data object 502 through one or more gateways. The uploads can be authenticated via API keys generated in an interface, such as a Web user interface or coordinator command-line interface (CLI). Fine-grained access control can be enforced using, for example, one or more identity and access management (IAM) policies, user groups, and roles enforce fine-grained access control. During upload, users can specify a storage class linked to a redundancy class. A corresponding coordinator can use this information to determine redundancy and fault tolerance policies. A distributed data system can validate the data, ensuring compliance with storage quotas and redundancy requirements.

For security during an ingestion phase, each part of a data object can be encrypted, such as by using AES-256-based encryption. A gateway can manage the relevant encryption keys, which can optionally be stored in an external key manager (e.g., a key management service (KMS)) controlled by the user. Such an approach can help to support a zero-knowledge architecture. Encrypted data can be temporarily cached to speed up uploads. Such a cache can be used on local disks, network file systems, or other external system-compatible systems. Metadata about an uploaded object can be stored in a centralized database managed by a coordinator, enabling consistent access across gateways. When caching is enabled, a gateway can immediately acknowledge uploads while offloading and redundancy encoding are performed asynchronously. If caching is disabled, offloading can occur synchronously.

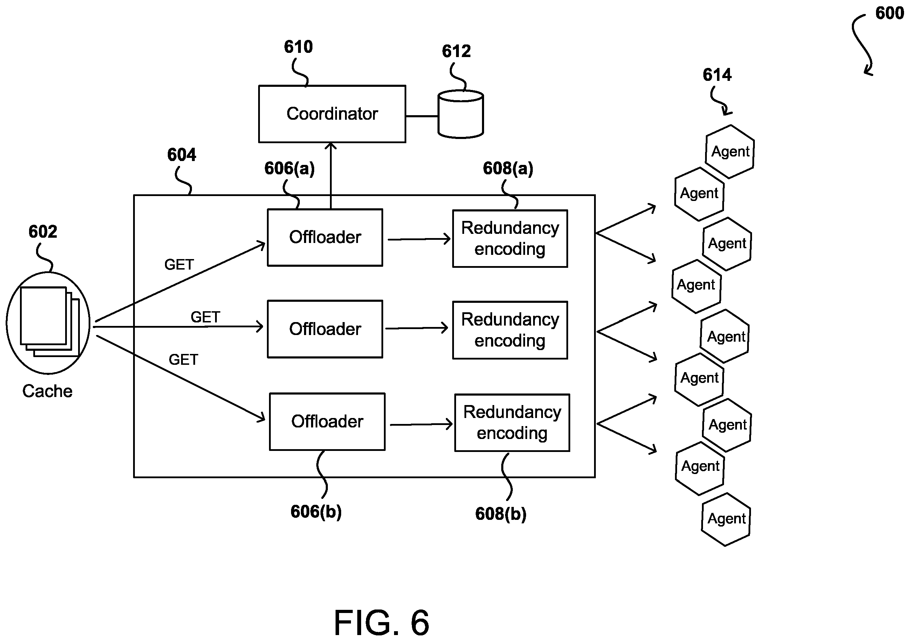

FIG. 6 illustrates components of a system 600 that can be used to offload data to a swarm, according to at least one embodiment. During an offloading phase, tasks such as redundancy encoding can be performed. In such an approach, uploaded data can undergo dual-layer redundancy encoding, such as by using erasure encoding algorithms like Reed-Solomon. A first layer can provide geographic redundancy, ensuring that data can be reconstructed even during large-scale failures. A second layer can apply local redundancy using error-correcting codes. Such an approach can help to protect against data corruption or loss due to hardware failures, bit rot, or other such localized issues.

In the example of FIG. 6, encrypted data object parts (such as those written to cache in FIG. 5) can be pulled from cache 602, such as by using a number of GET operations to a gateway 604. The data object parts can be provided to one of a number of offloaders 606(a),(b) that can perform data offload under guidance of a coordinator 610 that pulls relevant parameter, configuration, rule, and/or policy data from a coordinator repository 612. The data can be directed to one of a set of encoders 608(a),(b) that are able to perform redundancy encoding on the individual data object parts. The redundant instances of data can then be distributed across agents 614 of a swarm to provide redundancy.

A coordinator 610 can select a ring for the upload, as may consist of a collection of agents 614 that were considered to be appropriate, or "optimal," for tasks such as for shard storage based in part upon factors such as redundancy class rules, node health, geographic diversity, and fault tolerance needs. In at least one embodiment, selection criteria for the agents 614 of a ring can include factors such as remaining storage capacity, node health and uptime, and geographic diversity for fault tolerance. Policies such as round-robin or other load-balancing algorithms can be employed as well to help distribute shards across rings efficiently. Shards can be distributed across nodes in the same nexus for local redundancy, and can be distributed across different nexuses for geographic redundancy. Agents 614 on (or otherwise associated with) the individual nodes can save shards to disk, ensuring data integrity and consistency. Once the appropriate shards are stored, a coordinator 610 can update and/or finalize the relevant metadata, allowing for data retrieval from any gateway configured with the same (or at least similar) policies.

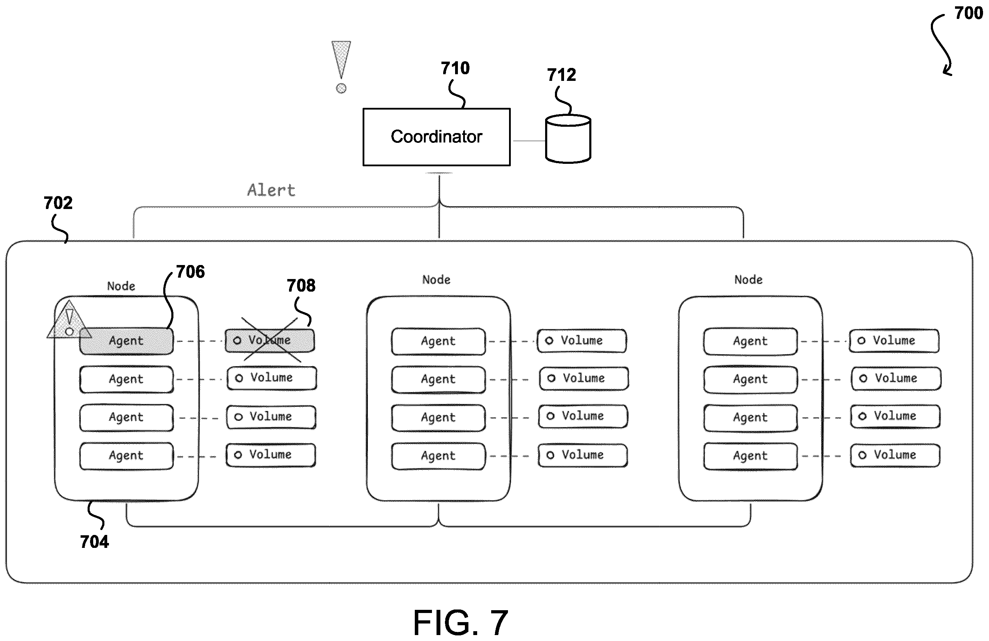

A Data Recovery stage can perform tasks, such as those relating to the handling of failures at the node and nexus levels, which can help to maintain uninterrupted access to data. FIG. 7 illustrates an example set of components 700 of a system, similar to that illustrated in FIG. 2, that can be used to detect component failures according to at least one embodiment. As discussed with respect to FIG. 2, a nexus 702 can include a number of nodes each hosting a number of agents with associated storage volumes. A coordinator 710 can continuously monitor these and other such components of the system, and can identify failures or other issues impacting any of the individual agents, nodes, and/or nexuses. In at least one embodiment, failures can be identified through real-time health checks and diagnostics. If a security threshold (as may be stored to an associated repository 712) is determined by a coordinator 710 to have been breached, then an appropriate action can be taken, such as to notify a user or administrator who can initiate recovery.

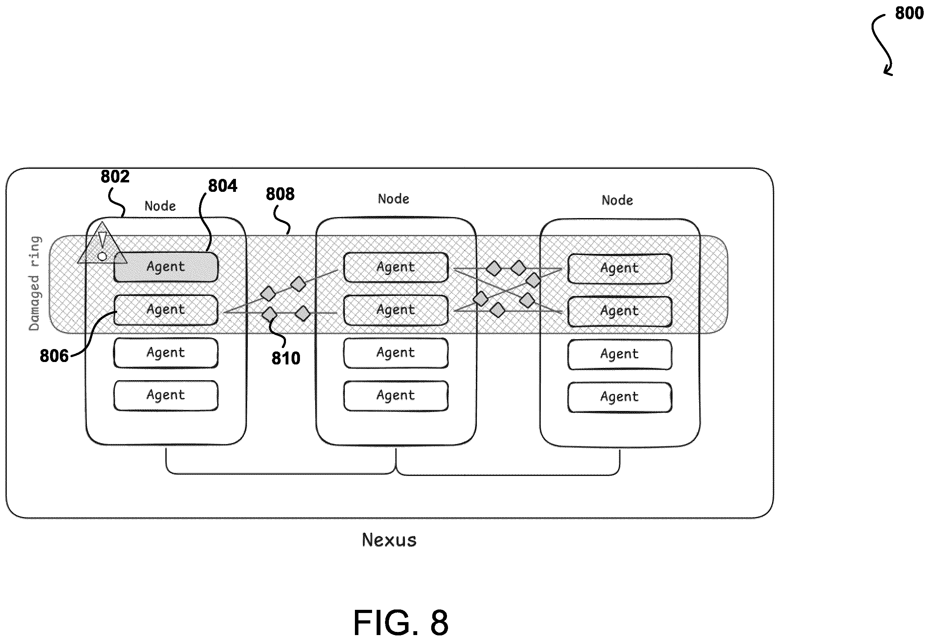

As mentioned, recovery can include a local recovery and/or a geographic recovery. FIG. 8 illustrates one example approach for performing local recovery inside a nexus 800, according to at least one embodiment. A local recovery can be performed when, for example, a node 802 in a nexus 800 is determined to have failed. This could include failure of all or a portion of a node, such as when an agent 804 on a node 802 is determined to be unavailable. A local recovery process can involve replacing failed components and deploying new nodes or agents, for example, where new agents can be associated with new storage volumes. Recovery can be initiated by, for example, a system interface or one or more APIs. Peer-to-peer (P2P) connections can then be established among all agents within the same damaged ring 808 in the nexus 800. Any missing shards 810 can be restored by retrieving data from other local nodes 806, processing the data, and re-establishing redundancy within the nexus 800.

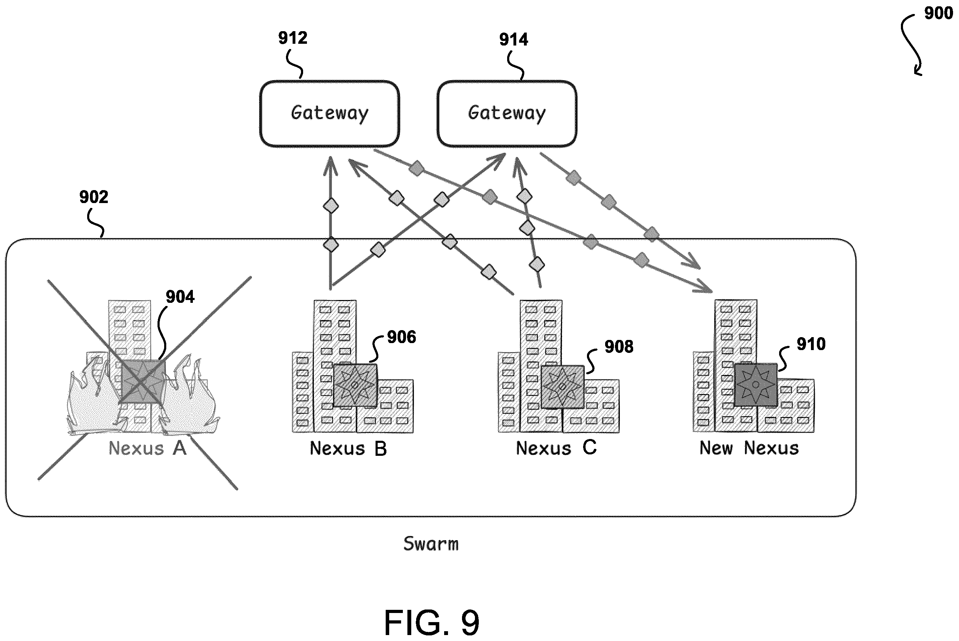

Approaches in accordance with various embodiments can also provide for geographic recovery. As an example, FIG. 9 provides example components of a system 900 that can perform geographical recovery using one or more gateways 912, 914 according to at least one embodiment. In this example, there are three nexuses 904, 906, 908 in a swarm 902. In this example, a failure event is detected with respect to nexus A 904. In cases of nexus-level failure, a distributed data system can reconstruct the impacted data using shards stored in alternative nexuses 906, 908. A new nexus 910 can be created, where operators connect new nodes to form a replacement nexus that satisfies at least redundancy class requirements, among other such requirements or operational parameter ranges, etc. In this example, one or more gateways 912, 914 can assist with the recovery. The gateways 912, 914 can download subsets of data from surviving nexuses 906, 908 of the swarm, invert redundancy layers to recreate original data parts, and generate new data shards corresponding to the shards lost in the failed nexus 904. These newly recreated shards can then be distributed to the new nexus 910, restoring system health.

A System Optimization stage can help to ensure that a distributed storage system adapts efficiently to workload changes and resource availability, among other such variables. During such a stage, nodes can be added or reallocated dynamically through, for example, a dashboard or API. The dynamic addition or relocation can help to allow the system to scale during periods of varying demand, in particular to be able to support high levels of demand. During lower-demand periods, nodes may be decommissioned or relocated to help reduce costs. When selecting peer nodes, nodes can be selected for various data operations based in part on factors such as uptime, geographic diversity, and current workloads. Such selection approaches can help to ensure at least relatively consistent performance and reliability under varying conditions.

In at least one embodiment, artificial intelligence can be used to perform functions to assist in operation of such a distributed storage system. For example, one or more machine learning algorithms can receive system input and analyze system activity. These algorithms (or models) can be used to infer, or predict, potential node or nexus failures. Such algorithms can perform other inferencing operations as well, such as to attempt to optimize shard placement. Simulating different redundancy strategies can help to reduce latency and enhance fault tolerance. The machine learning algorithms or models can also continue to learn or be fine-tuned over time using newly generated or additional data that can be used as training data. Continued learning allows a distributed data storage system to adapt to factors such as changing usage patterns, which can help to improve recovery speed and resource efficiency. The AI can be part of a framework, as disclosed herein, that can deliver a highly fault-tolerant, scalable, and efficient distributed storage system designed to meet demanding operational and reliability standards.

In at least one embodiment, a distributed storage system solution can run on a peer-to-peer (P2P) network where each node is connected to multiple others, with a central hub (e.g., a coordinator) that can attempt to optimize the network for at least speed and efficiency. The intelligence of the coordinator, combined with the power of distribution, provides a geo-distributed cloud object storage that provides superior security, scalability, and cost-effectiveness. A P2P network can be the physical layer that serves as a backbone of such a platform. As mentioned, a swarm can be composed of multiple nodes, working together to provide secure and scalable cloud storage for users. A physical node can comprise a standalone device that acts as both a data storage unit and relay node, enabling data to be securely stored and shared on the network, while a virtual node is a device virtualized on top of the customer's existing on-prem infrastructure.

To ensure maximum security, user data can be encrypted and split into chunks, which are then processed into multiple redundant shards and safely spread across the network through peer-to-peer, end-to-end encrypted channels. Because of this, no node stores any file or object in its entirety - not even its owner's files. Instead, it stores encrypted shards of multiple people's files. A key can be randomly generated as appropriate, and as described with respect to FIG. 5 can also be encrypted with another key (e.g., a gateway key) for additional protection. Only this second key may be possessed by a user in at least one embodiment, so that a provider of the storage resources is not able to decrypt the data being stored without knowledge of the user.

In one embodiment, an example architecture revolves around three types of entities: an agent, a coordinator, and an SDK. As mentioned, an agent is a small piece of software that runs inside a node and enables a storage node within the peer-to-peer network.

The coordinator can be comprised of a set of centralized microservices designed to coordinate and optimize a swarm. Various tools and resources allow developers to build software applications on top of this architecture, interacting with the agent, the coordinator, and a gateway to allow for storage service-compatible cloud object storage.

As used herein, an "object" can refer to binary data, often known as a Binary Large Object (BLOB). BLOBs can encompass images, audio files, spreadsheets, and even binary executable code. Object storage refers to a platform that provides specialized tools for storing, retrieving, and locating BLOBs. In terms of practical applications, it is a type of data storage architecture designed for large amounts of unstructured data, such as videos, audio files, images, and documents. It organizes objects into buckets, similar to folders in a file system, with each bucket able to hold an unlimited number of objects. Unlike traditional file and block storage, object storage does not utilize a hierarchical file system. Instead, it has a flat address space, where data is stored as objects containing raw data, metadata, and a unique identifier.

Object storage is superior to block and file storage in several ways. As an example, object storage provides higher levels of data durability by replicating data across multiple nodes and storing it in a flat address space, minimizing the risk of data loss in the event of a node failure. Object storage is designed to handle large amounts of unstructured data in a high-performance manner, making it ideal for storing and accessing vast quantities of files, images, videos, and other data types. Object storage can also eliminate the need for expensive data tiering, making it more cost-effective than traditional file and block storage.

Data storage methods have progressed over the years to adapt to the changing nature of data. File-based and block-based storage are well-suited to structured data, but as organizations face increasing volumes of unstructured data, object-based storage has emerged as the superior solution. File storage organizes data within folders and is based on a hierarchy of directories and subdirectories. This works well for small, easily organized data, but as the number of files grows, it becomes cumbersome and time-consuming. Block storage breaks down a file into equally sized blocks and stores them separately, offering improved efficiency and performance for critical business applications and transactional databases. Object storage, on the other hand, treats objects as discrete units of data stored in a structurally flat environment, with each object including raw data, metadata, and a unique identifier. It offers cost-effective storage capacity for unstructured data and is ideal for data that does not change frequently or at all. Additionally, it provides more descriptive metadata than file storage, allowing for customization and further analysis.

In at least one embodiment, a distributed simple storage service (such as that from Cubbit), can be used that is a geo-distributed, S3-compatible object storage platform. Its buckets can provide reliable and scalable storage solutions for unstructured data. Additionally, the geo-distributed nature of such a solution provides users with enhanced security and cost-effectiveness compared to traditional centralized cloud storage solutions. Being compatible with storage services, such as S3, such a system or platform can offer state-of-the-art solutions for operations such as data protection, distribution, and retrieval, such as object locking, bucket versioning, and multipart upload. Such an approach can also provide a solution for organizations looking to automate their off-site backups in a fast, secure, and immutable manner. Approaches can be compatible with clients such as Veeam, making it easy to store backups and protect data from disaster. With its advanced data management features, users can easily retrieve their data as needed cost-effectively. The geo-distributed network infrastructure provides scalable storage for large amounts of data without sacrificing performance. Data security is a top priority, with multi-layered encryption and robust disaster recovery options ensuring that your data is always protected. With the right hybrid cloud strategy, users can virtually extend their NAS and virtual machines without disrupting workflow - ensuring quick recovery of cold backups while collaborating locally in a secure manner. Whether dealing with massive data sets or demanding applications, a user can execute a simple, secure, and high-performance hybrid cloud strategy while breaking free from bandwidth limitations. A user can also be allowed to automate scripting processes, effortlessly migrate massive amounts of data, and stay compliant with regulations. With a simple change of endpoint and connection to such a system via an interface such as an RClone/AWS CLI, a user can implement a multi-cloud strategy, diversify risk, and provide customers with a secure exit plan that meets GDPR requirements. With two-way synchronization between a NAS and object storage, a user can schedule backup jobs and safeguard data against potential threats such as ransomware and natural disasters. By utilizing deduplication technology, a user can also compress data, minimize bandwidth usage, and shorten transfer times. Implementing a comprehensive backup plan can provide peace of mind, as data is secure and easily accessible in case of an emergency.

A set of APIs can allow a user to streamline an app development process and focus on building without worrying about data storage. Such a solution can provide a persistent data store for building or transitioning to cloud-native applications, providing a highly scalable, flexible, and cost-effective solution. A user can change an endpoint and deploy it on the object storage for immediate results. Such approaches can be highly cost-effective for storing and distributing large and rich media files, such as music, video, images, and more complex multimedia objects. With its powerful global distribution capabilities, organizations can quickly and easily distribute their media content to a global audience, reducing costs and improving user experience.

Such a storage solution can be used to store large amounts of any data type, including big data. With third-party apps, organizations can execute big data analysis and gain valuable insights into customer behavior, operations, and market trends. The data can be stored in its raw form, allowing for flexibility in analyzing it and deriving meaningful insights. This can help organizations make more informed decisions and drive growth, without having to worry about the limitations of traditional storage systems. Storage solutions, according to at least one embodiment, can handle large amounts of machine-to-machine data efficiently and cost-effectively. As such solutions are also compatible with external storage services, third-party apps can be leveraged to support artificial intelligence and advanced analytics applications to turn data generated by IoT devices into actionable insights.

When it comes to geo-distributed object storage, it can be crucial to ensure that nodes stay online. This can guarantee the highest standards of durability (99.999999999%) and availability (99.95%). To do that, many centralized cloud companies create multiple copies of data via strategies like RAID or bucket replication. This allows for diversifying the risk of downtime but still comes with bandwidth and storage capacity saturation. In the case of RAID, the data is also vulnerable to local disasters like fires and blackouts. Instead, as discussed herein, various solutions can leverage redundancy via, for example, Reed-Solomon error-correcting code. This can help to ensure 99.999999999% of durability and 99.95% availability without considerable sacrifices in terms of performance, storage capacity, and ensuring offsite geo-distribution. Payloads are able to persist on the network with a storing ratio of the original payload size - with higher performance and the same (or even higher) durability of RAID and bucket replication. Even though there is only a small probability of losing a file by leveraging the Reed-Solomon algorithm, the chance that a significant number of agents in the same pool goes offline at the same time still exists (e.g., a blackout, local disaster, fire).

To reduce a likelihood of such issues, a coordinator can select nodes based on various criteria. These include, for example, an uptime criterion, as a peer will be more reliable and available to receive shards if its uptime is high. A geolocation can be used, as there is a balance between the choice of close peers (to optimize performance) and distant ones (to diversify the risk of pool downtime due to blackouts and local disasters. A load average criterion can be used, as the more shards a peer handles, the greater the probability of losing a payload when a peer goes offline. For this reason, a good pool should not handle too many related shards. A bandwidth criterion can be used, as bandwidth of the peers should be balanced inside the pool to provide a uniform transfer speed to all users. A peer history criterion can also be used, as if users turn off some nodes systematically at night, they get a low rank, so other peers are chosen as more reliable. On top of peer selection, a file recovery strategy can be used that can crowdsource the power of peer-to-peer nodes.

A coordinator, which is optional in at least some embodiments where intelligence may be decentralized, can serve as a centralized intelligence that is in charge of operations such as ensuring the security of transactions, facilitating communications between agents, and optimizing the payload distribution across the network. A coordinator can also keep track of file locations and uptime via metadata and can trigger recovery procedures for files in the swarm. In at least one embodiment a coordinator can be cryptographically blind, as it only knows the files' location and the associated functional metadata. All payloads can be stored on the distributed storage nodes, ensuring high performance and resilience through geo-distribution. A coordinator can play a key role in data distribution, peer selection, and recovery procedures. Metadata can be stored in a distributed fashion as well, and may be stored independent of any particular data shards in at least one embodiment.

Files stored on such a platform can be split into chunks and then encrypted, with the encryption keys stored encrypted or in plain text in a KMS or other such location. The files can be segmented into shards (using an algorithm called Reed-Solomon) and geo-distributed on the peer-to-peer network of nodes. The original file can be recovered from a subset of these shards. After the Reed-Solomon redundancy procedure, a coordinator can determine which agents are most suitable for hosting the encrypted shards of files. Each of the shards can be stored on a different agent. To do so, a coordinator can run one or more machine learning algorithms to nullify the probability of losing files and grant a steady network performance. A coordinator can spread the chunks as far as possible from each other while minimizing network latency and other factors (bandwidth usage, storage optimization, etc.). From the shards created by the redundancy protocol, a user only needs a subset of these shards to download a file from a swarm. To ensure the highest standards of durability and availability, a coordinator can monitor the uptime status of each node, triggering a recovery procedure when the total number of online shards hits a certain threshold. When the recovery procedure is triggered, the coordinator can alert the remaining online storage nodes that host that file to contact a set of newly available nodes to fully restore the number of online shards to the maximum level.

Even though the probability of a coordinated downtime that results in an unavailable file may be negligible in at least some implementations, the chance that a significant number of peers in a pool goes offline simultaneously still exists (e.g., a blackout, local disaster, fire). To ensure the highest standard of durability (e.g., 99.999999999%) and availability (e.g., 99.95%), one approach can check the criteria used for peer selection discussed above or take a lazy recovery approach. In a lazy recovery approach, if after a series of cumulative disconnections, the redundancy of a file is smaller than a chosen security threshold, a coordinator can trigger a recovery procedure, referred to here as a lazy recovery procedure. In such a procedure, a coordinator can identify the alternative members of the pool that will replace the offline members. The coordinator instructs a node to retrieve a number of shards from the damaged pool. The chosen node retrieves the shards and inverts Reed-Solomon to obtain an encrypted chunk. It can be noted that it is not necessary to know the AES key used to encrypt the file to invert the redundancy process. The node can then redistribute the recovered shards to the new members of the original pool.

In many instances, a wide variety of computing operations will be performed in an enterprise-type world, where network nodes will increasingly be hosted within datacenters rather than scattered across various geographical locations, such as in company offices or the homes of various users. Approaches in accordance with various embodiments can provide for reliable file redundancy in such a geo-distributed manner. In at least one embodiment, file redundancy can be handled, at least in part, through a combination of swarm, nexus, and ring-based resources.

In at least one embodiment, a swarm can include three or more nodes that, in aggregate, form a unique storage system. A node can refer to any appropriate computing resource that is at least able to store data, such as a compute server, data server, or networked database, and in at least one embodiment may include a combination of physical and virtual resources. Data within a given swarm can be stored in a distributed manner across at least a subset of these nodes. This can include sharding a corpus of data, for example, and distributing the data across a set of storage nodes, where the data is replicated according to various configured settings. The structure of individual swarms can be highly adaptable, spanning from simple flat topologies to intricate multi-layer and multi-site configurations, among other such options. The adaptability of the structure can help to enhance aspects such as data durability, distribution, and infrastructure resilience, even in configurations limited to a few sites or datacenters.

When used with a fully managed object store offering, an operator can use a dashboard GUI to create and configure any appropriate number of swarms. During swarm creation, an operator will typically need to specify and/or configure the desired redundancy levels for a given swarm. This can be done in various ways, such as manually or through use of a wizard, asking the user questions to suggest the recommended redundancy configuration for the user's needs.

During creation of a redundancy class, an operator can select one or more nexuses that will be part of the class and can specify the parameters that will determine its redundancy scheme. An example redundancy scheme that can be implemented in a redundancy class can rely, at least in part, upon a selected encoding scheme, such as the Reed-Solomon erasure encoding scheme. Such a scheme can be developed on at least two levels, including a geographic level between multiple nexus, as well as a local level between nodes within a single nexus. Such a scheme can be defined using a number of variables or parameters, as may include a number of nexuses $n_l$ to be included, a number of nexus $k_l$ that can be lost concurrently, a number of nodes $n_n$ per nexus, and a number of nodes $k_n$ that can be lost concurrently per nexus, among other such options. A redundancy scheme can introduce a size overhead, as may be given by a formula such as the following:

$$\text{ratio} = \frac{n_l k_l}{n_l} \times \frac{n_n k_n}{n_n}$$

For example, with a configuration of:

$$n_l = 2, k_l = 1, n_n = 12, k_n = 4$$

the ratio would be 1.995:

$$\text{ratio}_l = \frac{2+1}{2} = 1.5$$

$$\text{ratio}_n = \frac{12 + 4}{12} = 1.33$$

which gives a total of: 1.5 x 1.33 = 1.995.

A security scheme used for such an implementation can allow these variables to be configured as desired, with the only requirement being that $n_l \geq 3$. Redundancy can then be guaranteed on a geographic level between the various nexus (such as at least three nexus) and a local level between nodes within a single nexus. Such a scheme can help to ensure that if one or more nodes within the individual nexus are lost (which may be a highly likely situation), reconstruction can occur efficiently within the nexus without transferring data over the network. If, instead, an entire nexus goes missing, it will still be possible to rebuild the files geographically thanks, at least in part, to the second geographic redundancy layer. From a practical point of view, Reed-Solomon encoding is cascaded at least twice in an embodiment that uses such an encoding scheme. This means that the output of the first encoding (which produces shards) is used as the input of the second layer. Each shard can then be fed into the encoding matrix, producing additional shards that will eventually be transferred to the swarm nodes.

In at least one embodiment, rings can be used that can each be imagined as an instance of a redundancy class. A group of nodes hosting at most D bytes of data, as may be given by:

$$(n_l + k_l)(n_n + k_n)$$

From this, a nexus can host one or more rings for each redundancy class it supports.

Having multiple redundancy classes exposed by a single swarm allows the same infrastructure to provide different reliability SLAs to end users without configuring separate clusters. Through tenant configuration, for example, an operator can then target a specific redundancy class through ad hoc defined conditions (e.g., routing rules). For example, it can be decided that files smaller than a particular size are to be routed to a redundancy class. Similarly, files with a predefined extension could be routed to another redundancy class. In at least one embodiment, when a user wants to upload an object to such a network, the object can be divided into two or more parts, such as may be 5MB or larger in size to justify the maintenance of an additional piece of data. This can be accomplished using a feature such as a multi-part upload feature. The associated data parts can be sent to a location such as a data service gateway, which may be deployed by a service provider or a client, among other such entities. The data parts can be encrypted, such as by using a randomly generated advanced encryption standard (AES) key. The keys are then, in turn, managed within a compatible key management store that can be either managed by a service provider or a client, etc. These encrypted parts may then be subjected to the encoding, such as Reed-Solomon double encoding. At this point, the resulting encrypted shards, as given by:

$$(n_l + k_l)(n_n + k_n)$$

are transferred to the storage nodes. A coordinator can then be contacted, and after applying one or more routing rules and analyzing the configuration of a tenant configuration connected to the gateway, the coordinator can select the swarm and redundancy class on which to upload the object part. To do this, a coordinator can select a ring of the class whose remaining capacity is less than *D*. If no ring is available, a new ring can be allocated, such as by selecting:

$$(n_l + k_l)(n_n + k_n)$$

new nodes for a total size *D.* The resulting nodes may then be communicated to the gateway, which can transfer the shards.

As part of a recovery procedure, a coordinator can continuously monitor nodes belonging to the swarms via a health check mechanism. The moment that *z* nodes should be lost, with $z \geq t$, in turn, defined as $t = n + k/3$, a recovery can be triggered for both levels of redundancy. The recovery procedure can be triggered manually by, for example, an operator who administers the swarm from the composer interface or through the command line interface (CLI) or APIs. As an example, a node could be offline for other reasons, such as maintenance, so it can be desirable to avoid triggering the operation automatically in at least certain circumstances.

If the inner layer is at risk, which may be the most likely situation for $z_n < t$, the remaining ring nodes within the endangered nexus can organize to rebuild the lost shards without transferring any payloads outside the nexus. On the other hand, if an entire nexus is lost (e.g., a fire or natural disaster), it will still be possible to launch a recovery procedure that will download all the shards from remaining nexus that are still healthy to rebuild the missing shards before transferring them to a new nexus that will be used as a replacement. While such an operation may be more bandwidth- and processor-intensive, such operations should only be performed in relatively few instances.

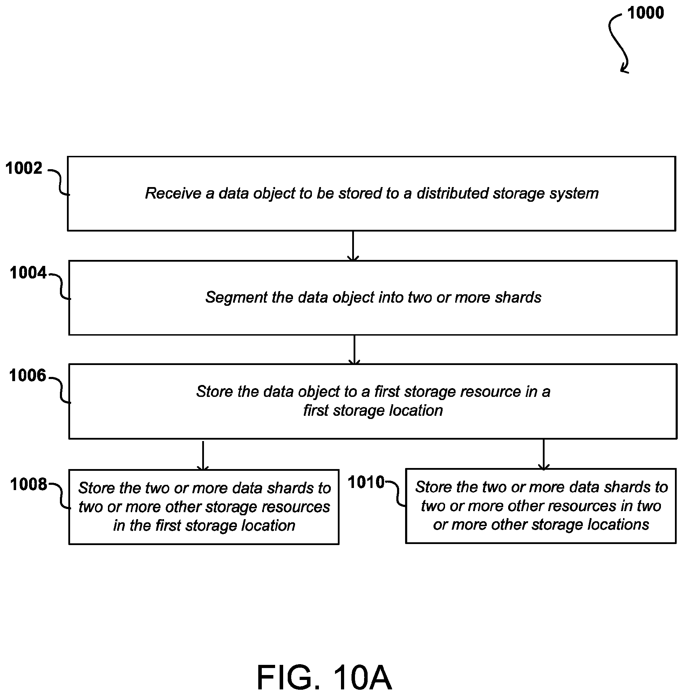

FIG. 10A illustrates an example process 1000 that can be used to provide dual redundancy for a data object according to at least one embodiment. It should be appreciated that for this process, and all processes described herein, that there may be additional or fewer steps performed in similar or different orders, or at least partially in parallel, unless otherwise stated. In this example, a data object is received 1002 that is to be stored to a distributed storage system. In order to provide data redundancy, the data object can be segmented 1004 into at least two shards of data, which each represent a portion of the data in the data object. If the data object is small enough (e.g., less than 5MB, although size thresholds can be configurable), it can also be encrypted and/or encoded directly, without splitting it into segments. The data object itself can be stored 1006 to a first storage resource in a first storage location, which may have been selected from one or more storage resources allocated for use by a source of the data object. This example process can provide at least two levels of data redundancy. The two or more data shards can be stored 1008 to two or more other storage resources in the first storage location. In this way, if there is a problem with the first storage resource then the shards stored to other storage resources in the same storage location (e.g., datacenter) can be used to recover the data object for storage to an available storage resource in that storage location. The two or more data shards can also be stored 1010 to two or more other resources in two or more other storage locations. Using this redundancy mechanism, if there is a problem with availability of the first storage location (e.g., the datacenter where the data object is stored), then the shards can be used to reconstruct the lost data object for storage in an available storage location.

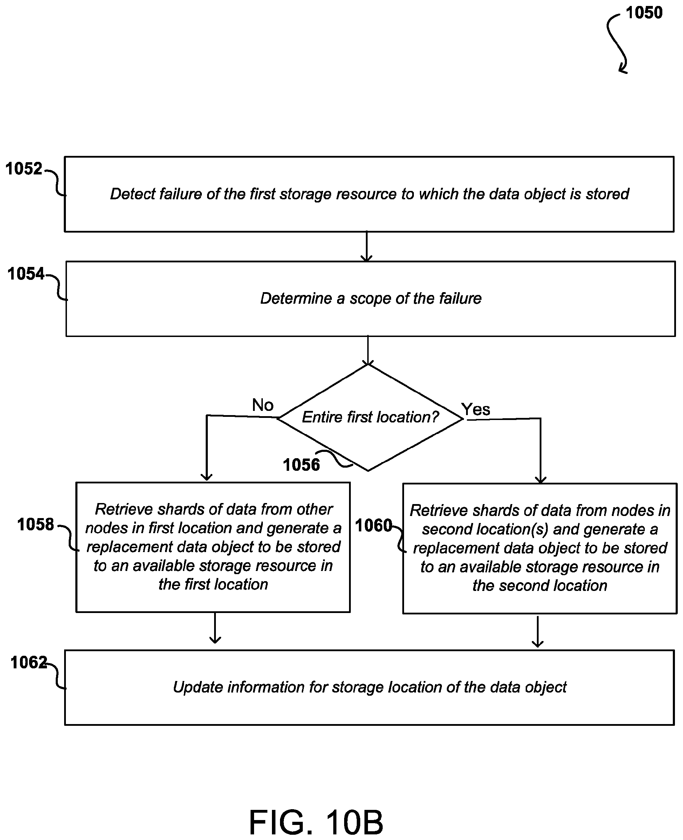

FIG. 10B illustrates an example process 1050 that can be performed to recover a lost data object in accordance with at least one embodiment. In this example, a failure of at least the first storage resource to which a data object is stored can be detected 1052. The process can attempt to determine 1054 a scope of the failure, such as to determine whether the failure was due to only that particular storage resource, involved other storage resources in that storage location (e.g., datacenter), or involved the entire storage location, such as where all data resources in a datacenter are unavailable for at least a period of time. If it is determined 1056 that the scope was limited to a subset of storage resources in the first storage location, then corresponding shards of data stored for the data object can be retrieved 1058 from other nodes in that first location in order to generate a replacement data object to be stored to an available storage resource in that first location. In this way, no data needs to be transmitted from outside the first location, which can help to minimize bandwidth requirements and improve latency. If it is determined 1056 that the failure or issue impacts the entire first location, such as where a datacenter went offline, then shards of data from nodes in one or more second locations (e.g., other datacenters) can be retrieved 1060 and used to generate a replacement data object to be stored to an available storage resource in the second location (or a third storage location). Once the lost data object has been restored using the appropriate data shards, the information (e.g., mapping) for the storage location of the data object can be updated 1062.

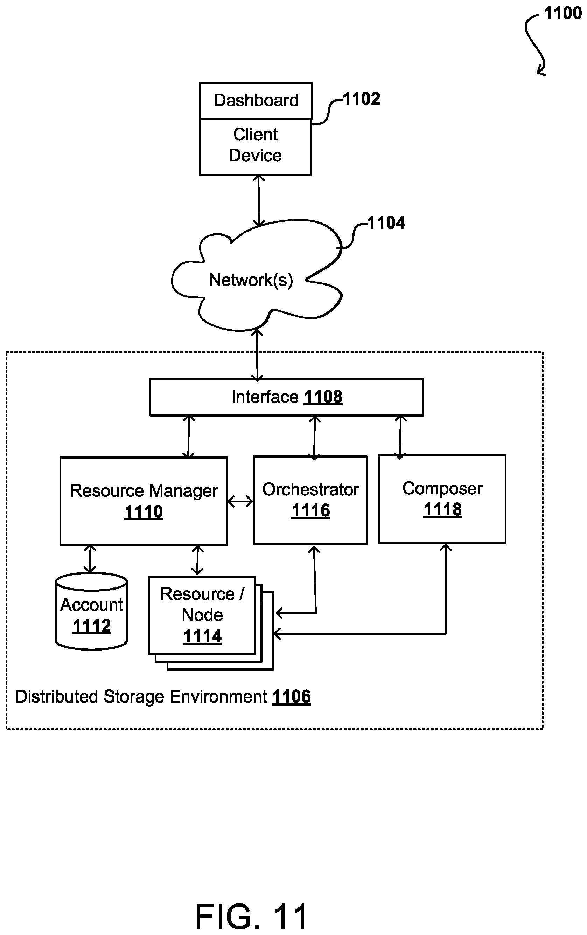

FIG. 11 illustrates components of an example data management system 1100 in accordance with at least one embodiment. It should be understood that this is just one example for purposes of explanation, and there can be various other components and configurations utilized within the scope of the various embodiments and discussed and suggested herein. A user might have an account with a provider of a distributed storage environment 1106, or a third party that utilizes resources of the distributed storage environment, among other such options. The user can use a dashboard executing on the client device 1102 to submit requests across at least one network 1104, such as a cellular network or the Internet. Requests can be received to an interface layer 1108, which can direct the request to the appropriate recipient. If the user request involves storage of a data object, for example, the request might get directed to a resource manager 1110 that can check information for the user against information in an account database 1112, for example, to determine whether the user is to have access to an amount of capacity to perform such storage. The resource manager 1110 can also perform related tasks, such as to select capacity from a set or pool of resources or nodes 1114 to use for the storage. The resources may be located in the same location or in different locations, as discussed elsewhere herein. Requests to store, retrieve, or process data in such an environment can be directed to an orchestrator 1116, composer 1118, or other such module or service as discussed herein. Such modules can be used to perform tasks such as to allow for user configuration of data storage, ensure data redundancy, perform recovery for a lost or corrupted data object, and so on.

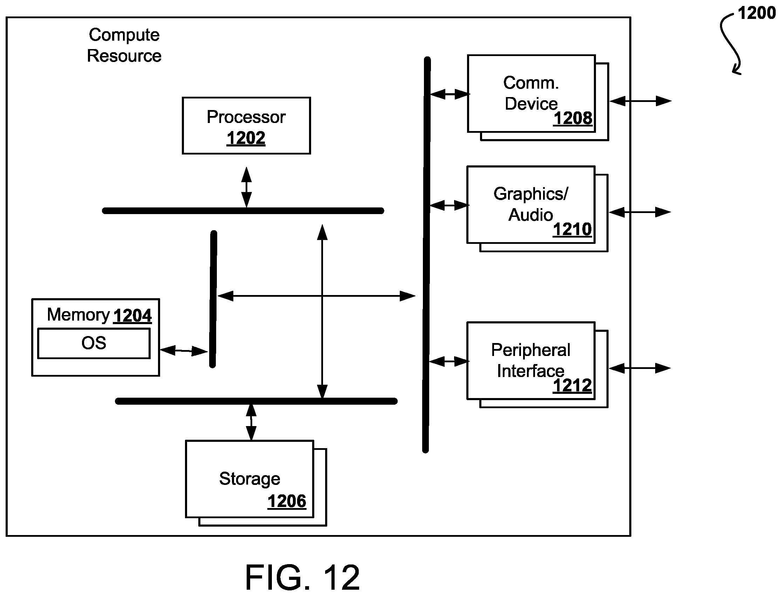

Computing resources, such as servers or personal computers, can be used in such a deployment and will generally include at least a set of standard components configured for general purpose operation, although various proprietary components and configurations can be used as well within the scope of the various embodiments. FIG. 12 illustrates components of an example computing resource 1200 that can be utilized in accordance with various embodiments. It should be understood that there can be many such compute resources and many such components provided in various arrangements, such as in a local network or across the Internet or "cloud," to provide compute resource capacity as discussed elsewhere herein. The computing resource 1200 (e.g., a desktop or network server) will have one or more processors 1202, such as central processing units (CPUs), graphics processing units (GPUs), and the like, that are electronically and/or communicatively coupled with various components using various buses, traces, and other such mechanisms. A processor 1202 can include memory registers and cache memory for holding instructions, data, and the like. In this example, a memory device 1204 may be provided in the form of physical RAM or RAM, which can include the code for an operating system as well as various other instructions and data utilized for operation of the computing device. Additional storage devices 1206 may be provided, as may include hard drives, flash drives, optical storage, and the like, for persisting data and instructions similar, or in addition to, those stored in the processor and memory.

A processor 1202 can also communicate with various other components via a bus (e.g., an interface bus, a graphics bus, etc.), where those components can include communications devices 808 such as cellular modems or network cards, media components 1210, such as graphics cards and audio components, and peripheral interfaces 1212 for connecting peripheral devices, such as printers, keyboards, and the like. Various other or alternative components and configurations can be utilized as well as known in the art for computing devices.

At least one processor 1202 can obtain data from memory 1204, such as a dynamic random-access memory (DRAM) module. The data in memory may be managed and accessed by a memory controller, such as a DDR controller, through the coherency fabric. The computing device 1200 can also support multiple I/O devices using a set of I/O controllers connected via an I/O bus. There may be I/O controllers to support respective types of I/O devices, such as a universal serial bus (USB) device, data storage (e.g., flash or disk storage), a network card, a peripheral component interconnect express (PCIe) card or interface 1212, a communication device 1208, a graphics or audio card 1210, and a direct memory access (DMA) card, among other such options.

An operating system (OS) running on a processor 1202 can help to manage the various devices that may be utilized to provide input to be processed. This can include, for example, utilizing relevant device drivers to enable interaction with various I/O devices, where those devices may relate to data storage, device communications, user interfaces, and the like. Such a device may be used, for example, as a server in a server farm or data warehouse. Server computers often have a need to perform tasks outside the environment of the CPU and main memory (i.e., RAM). For example, the server may need to communicate with external entities (e.g., other servers) or process data using an external processor (e.g., a General-Purpose Graphical Processing Unit (GPGPU)). In such cases, the CPU may interface with one or more I/O devices. In an illustrative embodiment, a host computing device is associated with various hardware components, software components and respective configurations that facilitate the execution of I/O requests.

As discussed, different approaches can be implemented in various environments in accordance with the described embodiments. As will be appreciated, although a network- or Web-based environment is used for purposes of explanation in several examples presented herein, different environments may be used, as appropriate, to implement various embodiments. Such a system can include at least one electronic client device, which can include any appropriate device operable to send and receive requests, messages or information over an appropriate network and convey information back to a user of the device. Examples of such client devices include personal computers, cell phones, handheld messaging devices, smartphones, tablets, laptop computers, set-top boxes, personal data assistants, electronic book readers and the like. The network can include any appropriate network, including an intranet, the Internet, a cellular network, a local area network or any other such network or combination thereof. Components used for such a system can depend at least in part upon the type of network and/or environment selected. Protocols and components for communicating via such a network are well-known and will not be discussed herein in detail. Communication over the network can be enabled via wired or wireless connections and combinations thereof. In this example, the network includes the Internet, as the environment includes a Web server for receiving requests and serving content in response thereto, although for other networks, an alternative device serving a similar purpose could be used, as would be apparent to one of ordinary skill in the art.

The illustrative environment includes at least one application server and a data store. It should be understood that there can be several application servers, layers or other elements, processes or components, which may be chained or otherwise configured, which can interact to perform tasks such as obtaining data from an appropriate data store. As used herein, the term "data store" refers to any device or combination of devices capable of storing, accessing and retrieving data, which may include any combination and number of data servers, databases, data storage devices and data storage media, in any standard, distributed or clustered environment. The application server can include any appropriate hardware and software for integrating with the data store as needed to execute aspects of one or more applications for the client device and handling a majority of the data access and business logic for an application. The application server provides access control services in cooperation with the data store and is able to generate content such as text, graphics, audio and/or video to be transferred to the user, which may be served to the user by the Web server in the form of HTML, XML or another appropriate structured language in this example. The handling of all requests and responses, as well as the delivery of content between the client device and the application server, can be handled by the Web server. It should be understood that the Web and application servers are not required and are merely example components, as structured code discussed herein can be executed on any appropriate device or host machine as discussed elsewhere herein.

The data store can include several separate data tables, databases or other data storage mechanisms and media for storing data relating to a particular aspect. For example, the data store illustrated includes mechanisms for storing content (*e.g.,* production data) and user information, which can be used to serve content for the production side. The data store is also shown to include a mechanism for storing log or session data. It should be understood that there can be many other aspects that may need to be stored in the data store, such as page image information and access rights information, which can be stored in any of the above-listed mechanisms as appropriate or in additional mechanisms in the data store. The data store is operable, through logic associated therewith, to receive instructions from the application server and obtain, update, or otherwise process data in response thereto. In one example, a user might submit a search request for a certain type of item. In this case, the data store might access the user information to verify the identity of the user and can access the catalog detail information to obtain information about items of that type. The information can then be returned to the user, such as in a result listing on a Web page that the user is able to view via a browser on the user device. Information for a particular item of interest can be viewed on a dedicated page or window of the browser.

Each server typically will include an operating system that provides executable program instructions for the general administration and operation of that server and typically will include computer-readable medium storing instructions that, when executed by a processor of the server, allow the server to perform its intended functions. Suitable implementations for the operating system and general functionality of the servers are known or commercially available and are readily implemented by persons having ordinary skill in the art, particularly in light of the disclosure herein.

The various embodiments can be further implemented in a wide variety of operating environments, which in some cases can include one or more user computers or computing devices which can be used to operate any of a number of applications. User or client devices can include any of a number of general-purpose personal computers, such as desktop or laptop computers running a standard operating system, as well as cellular, wireless and handheld devices running mobile software and capable of supporting a number of networking and messaging protocols. Such a system can also include a number of workstations running any of a variety of commercially available operating systems and other known applications for purposes such as development and database management. These devices can also include other electronic devices, such as dummy terminals, thin-clients, gaming systems and other devices capable of communicating via a network.

In embodiments utilizing a server, the server can run any of a variety of server or mid-tier applications, including HTTP servers, FTP servers, CGI servers, data servers, Java servers and business application servers. The server(s) may also be capable of executing programs or scripts in response requests from user devices, such as by executing one or more Web applications that may be implemented as one or more scripts or programs written in any programming language, such as Java®, C, C# or C++ or any scripting language, such as Perl, Python or TCL, as well as combinations thereof. The server(s) may also include database servers, including without limitation those commercially available from Oracle®, Microsoft®, Sybase® and IBM® as well as open-source servers such as MySQL, Postgres, SQLite, MongoDB, and any other server capable of storing, retrieving and accessing structured or unstructured data. Database servers may include table-based servers, document-based servers, unstructured servers, relational servers, non-relational servers or combinations of these and/or other database servers.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network (SAN) familiar to those skilled in the art. Similarly, any necessary files for performing the functions attributed to the computers, servers or other network devices may be stored locally and/or remotely, as appropriate. Where a system includes computerized devices, each such device can include hardware elements that may be electrically coupled via a bus, the elements including, for example, at least one central processing unit (CPU), at least one input device (e.g., a mouse, keyboard, controller, touch-sensitive display element or keypad) and at least one output device (e.g., a display device, printer or speaker). Such a system may also include one or more storage devices, such as disk drives, magnetic tape drives, optical storage devices and solid-state storage devices such as random-access memory (RAM) or read-only memory (ROM), as well as removable media devices, memory cards, flash cards, etc.

Such devices can also include a computer-readable storage media reader, a communications device (e.g., a modem, a network card (wireless or wired), an infrared communication device) and working memory as described above. The computer-readable storage media reader can be connected with, or configured to receive, a computer-readable storage medium representing remote, local, fixed and/or removable storage devices as well as storage media for temporarily and/or more permanently containing, storing, transmitting and retrieving computer-readable information. The system and various devices also typically will include a number of software applications, modules, services or other elements located within at least one working memory device, including an operating system and application programs such as a client application or Web browser. It should be appreciated that alternate embodiments may have numerous variations from that described above. For example, customized hardware might also be used and/or particular elements might be implemented in hardware, software (including portable software, such as applets) or both. Further, connection to other computing devices such as network input/output devices may be employed.

Storage media and other non-transitory computer readable media for containing code, or portions of code, can include any appropriate media known or used in the art, such as but not limited to volatile and non-volatile, removable and non-removable media implemented in any method or technology for storage of information such as computer readable instructions, data structures, program modules or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices or any other medium which can be used to store the desired information and which can be accessed by a system device. Based on the disclosure and teachings provided herein, a person of ordinary skill in the art will appreciate other ways and/or methods to implement the various embodiments.

The specification and drawings are, accordingly, to be regarded in an illustrative rather than a restrictive sense. It will, however, be evident that various modifications and changes may be made thereunto without departing from the broader spirit and scope of the invention as set forth in the claims.

At least one embodiment of the disclosure can be described in view of the following clauses:

1. A computer-implemented method, comprising:

receiving a data object to be stored;

segmenting the data object into two or more data shards;

storing metadata for the data object in a centralized database;

storing at least one of the data object or the two or more shards in a local storage location; and

distributing the data shards redundantly across storage resources in at least two geographically distinct storage locations.

2. The computer-implemented method of clause 1, wherein redundancy and distribution of the data object across the storage resources is provided in a single upstream operation and without delegation to one or more other components.

3. The computer-implemented method of clause 1, wherein the local storage location is within a datacenter, and wherein the at least two geographically distinct storage locations include the datacenter and a remote datacenter.

4. The computer-implemented method of clause 1, further comprising:

encrypting the data object using an encryption algorithm; and

applying Reed-Solomon error correction coding to create the two or more data shards.

5. The computer-implemented method of clause 2, wherein the encryption algorithm ensures that no single storage node has access to complete or decrypted data objects.

6. The computer-implemented method of clause 1, wherein the data shards are to be distributed based in part on one or more configurable parameters, including at least one of:

a. a number of storage locations;

b. a number of storage locations that are accepted to be lost;

c. a number of nodes within a single location; or

d. a number of nodes that are accepted to be lost.

7. The computer-implemented method of claim 1, further comprising:
allowing user configuration of one or more redundancy levels through a graphical user interface (GUI).

8. The computer-implemented method of claim 1, wherein the storage resources in the at least one geographically distinct storage location are selected based on at least one of:

a. uptime criteria for nodes;

b. geographic diversity to mitigate correlated failures;

c. node bandwidth capacity; or

d. historical reliability metrics for nodes.

9. The computer-implemented method of clause 1, further comprising:

detecting a failure impacting a data object stored to a multiple storage resources in a first storage location; and

retrieving two or more data shards stored to two or more other storage resources in the first storage location to reconstruct the data object.

10. The computer-implemented method of clause 1, further comprising:

> detecting a failure impacting a data object stored to a first storage resource in a first storage location; and

> retrieving two or more data shards stored to two or more storage resources in at least a second storage location to reconstruct the data object.

11. A system, comprising:

> at least one processor;

> a memory device, the memory device storing instructions that, when executed by the at least one processor, cause the system to:

>> receive a data object to be stored;

>> segment the data object into two or more data shards;

>> store the data object to a primary storage resource in a first storage location; and

>> store the data shards redundantly across multiple storage resources within the first storage location and at least one second storage location.

12. The system of clause 11, wherein the instructions when executed further cause the at least one processor to:

> detect one or more failures impacting the data object in one of the storage resources in one or more of the first and second storage locations; and
> reconstruct the data object using the data shards stored in other resources in one or more of the first and second storage locations.

13. The system of clause 11, further comprising: a coordinator module to dynamically select storage nodes based at least on operational criteria, the operational criteria including at least node availability, geographic diversity, or load balancing.

14. The system of clause 11, wherein the instructions when executed further cause the at least one processor to:

> encrypt the data object using an encryption algorithm; and

> apply Reed-Solomon error correction coding to create the two or more data shards.

15. The system of clause 14, wherein the encryption algorithm ensures that no single storage node has access to complete or decrypted data objects.

16. A non-transitory computer-readable medium storing instructions that, when executed by at least one processor, cause the at least one processor to:

> receive a data object to be stored;

> segment the data object into two or more data shards;

> store the data object to a primary storage resource in a first storage location; and

> store the data shards redundantly across multiple storage resources within the first storage location and at least one second storage location.

17. The non-transitory computer-readable medium of clause 16, wherein the instructions when executed further cause the at least one processor to:

> restore lost shards within a single storage location, when possible, to reduce bandwidth usage; and

> perform inter-location recovery operations only when an entire storage location is unavailable.

18. The non-transitory computer-readable medium of clause 16, wherein the instructions when executed further cause the at least one processor to:

> encrypt the data object using an encryption algorithm; and

> apply Reed-Solomon error correction coding to create the two or more data shards.

19. The non-transitory computer-readable medium of clause 18, wherein the encryption algorithm ensures that no single storage node has access to complete or decrypted data objects.

20. The non-transitory computer-readable medium of clause 16, wherein the instructions when executed further cause the at least one processor to: allow user configuration of one or more redundancy levels through a graphical user interface (GUI).

**Claims**

1. A computer-implemented method, comprising:

receiving a data object to be stored;

segmenting the data object into two or more data shards;

storing metadata for the data object in a centralized database;

storing at least one of the data object or the two or more shards in a local storage location; and

distributing the data shards redundantly across storage resources in at least two geographically distinct storage locations.

2. The computer-implemented method of claim 1, wherein redundancy and distribution of the data object across the storage resources is provided in a single upstream operation and without delegation to one or more other components.

3. The computer-implemented method of claim 1, wherein the local storage location is within a datacenter, and wherein the at least two geographically distinct storage locations include the datacenter and a remote datacenter.

4. The computer-implemented method of claim 1, further comprising:

encrypting the data object using an encryption algorithm; and

applying Reed-Solomon error correction coding to create the two or more data shards.

5. The computer-implemented method of claim 2, wherein the encryption algorithm ensures that no single storage node has access to complete or decrypted data objects.

6. The computer-implemented method of claim 1, wherein the data shards are to be distributed based in part on one or more configurable parameters, including at least one of:

a. a number of storage locations;

b. a number of storage locations that are accepted to be lost;

c. a number of nodes within a single location; or

d. a number of nodes that are accepted to be lost.

7. The computer-implemented method of claim 1, wherein the storage resources in the at least one geographically distinct storage location are selected based on at least one of:

a. uptime criteria for nodes;

b. geographic diversity to mitigate correlated failures;

c. node bandwidth capacity; or

d. historical reliability metrics for nodes.

8. The computer-implemented method of claim 1, further comprising:

detecting a failure impacting a data object stored to a multiple storage resources in a first storage location; and

retrieving two or more data shards stored to two or more other storage resources in the first storage location to reconstruct the data object.

9. The computer-implemented method of claim 1, further comprising:

detecting a failure impacting a data object stored to a first storage resource in a first storage location; and

retrieving two or more data shards stored to two or more storage resources in at least a second storage location to reconstruct the data object.

10. A system, comprising:

at least one processor;

a memory device, the memory device storing instructions that, when executed by the at least one processor, cause the system to:

receive a data object to be stored;

segment the data object into two or more data shards;

store the data object to a primary storage resource in a first storage location; and

store the data shards redundantly across multiple storage resources within the first storage location and at least one second storage location.

11. The system of claim 10, wherein the instructions when executed further cause the at least one processor to:

detect one or more failures impacting the data object in one of the storage resources in one or more of the first and second storage locations; and

reconstruct the data object using the data shards stored in other resources in one or more of the first and second storage locations.

12. The system of claim 10, wherein the instructions when executed further cause the at least one processor to:

encrypt the data object using an encryption algorithm; and

apply Reed-Solomon error correction coding to create the two or more data shards.

**13.** A non-transitory computer-readable medium storing instructions that, when executed by at least one processor, cause the at least one processor to:

receive a data object to be stored;
segment the data object into two or more data shards;
store the data object to a primary storage resource in a first storage location; and
store the data shards redundantly across multiple storage resources within the first storage location and at least one second storage location.

**14.** The non-transitory computer-readable medium of claim 13, wherein the instructions when executed further cause the at least one processor to:

restore lost shards within a single storage location, when possible, to reduce bandwidth usage; and
perform inter-location recovery operations only when an entire storage location is unavailable.

**15.** The non-transitory computer-readable medium of claim 13, wherein the instructions when executed further cause the at least one processor to:

encrypt the data object using an encryption algorithm; and
apply Reed-Solomon error correction coding to create the two or more data shards.

100

Swarm

104

106

108

Nexus

Nexus

Nexus

FIG. 1

FIG. 2

FIG. 3

FIG. 4

FIG. 5

FIG. 6

EP 4 764 863 A2

FIG. 7

EP 4 764 863 A2

FIG. 8

FIG. 9

1000

1002 Receive a data object to be stored to a distributed storage system

1004 Segment the data object into two or more shards

1006 Store the data object to a first storage resource in a first storage location

1008 Store the two or more data shards to two or more other storage resources in the first storage location

1010 Store the two or more data shards to two or more other resources in two or more other storage locations

# FIG. 10A

1050

**1052** — Detect failure of the first storage resource to which the data object is stored

**1054** — Determine a scope of the failure

No ← Entire first location? → Yes

**1056**

**1058** — Retrieve shards of data from other nodes in first location and generate a replacement data object to be stored to an available storage resource in the first location

**1060** — Retrieve shards of data from nodes in second location(s) and generate a replacement data object to be stored to an available storage resource in the second location

**1062** — Update information for storage location of the data object

# FIG. 10B

1100

Dashboard
1102

Client
Device

Network(s) 1104

Interface **1108**

Resource Manager
**1110**

Orchestrator
**1116**

Composer
**1118**

Account
**1112**

Resource /
Node
**1114**

Distributed Storage Environment **1106**

FIG. 11

**FIG. 12**

EP 4 764 863 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 30851625
- US 63689390 B